# EUROPÄISCHE PATENTSCHRIFT

(11) **EP 1 994 659 B1**
(45) Veröffentlichungstag und Bekanntmachung des Hinweises auf die Patenterteilung: **16.08.2017**
(21) Anmeldenummer: 07704642.3
(22) Anmeldetag: 19.02.2007
(51) Int. Cl.: H04B 10/29, H04B 10/291

(54) **BIDIREKTIONALE OPTISCHE VERSTÄRKERANORDNUNG**
BIDIRECTIONAL OPTICAL AMPLIFIER ARRAY
SYSTÈME D'AMPLIFICATEUR OPTIQUE BIDIRECTIONNEL

(30) Priorität: 06.03.2006 DE 102006010147
(43) Veröffentlichungstag der Anmeldung: 26.11.2008
(73) Patentinhaber: Nokia Solutions and Networks GmbH & Co. KG, 81541 Munich (DE)
(72) Erfinder: GIANORDOLI, Stefan, A-8280 Fürstenfeld (AT); RAPP, Lutz, 82041 Deisenhofen (DE); RASZTOVITS-WIECH, Michael, A-1170 Wien (AT); STADLER, Andreas, A-1040 Wien (AT)
(74) Vertreter: Weidel, Gottfried
(86) Internationale Anmeldenummer: PCT/EP2007/051563
(87) Internationale Veröffentlichungsnummer: WO 2007/101779

(56) Entgegenhaltungen:
- EP-A- 1 231 729
- DE-A1- 4 104 084
- US-A- 6 101 016

## Beschreibung

Die Erfindung betrifft eine bidirektionale optische Verstärkeranordnung nach dem Oberbegriff der Patentansprüche 1 und 2 und ein optisches Übertragungssystem nach dem Oberbegriff des Patentanspruchs 10.

Bei optischen Netzen wird zwischen Weitverkehrsnetzen, den so genannten "Core-Netzwerken" ("core" engl. für Kern) und Zugangsnetzen, den "Access-Netzwerken" ("access" engl. für Zugang) unterschieden. Die Zugangsnetze können rein passiv ausgestaltet sein und werden in diesem Fall als PONs (engl. für "passive optical network") bezeichnet. Kennzeichnend für ein PON ist, dass eine zentrale Vermittlungs- und Management-Einheit ("optical line termination", abgekürzt OLT) zu/von mehreren Teilnehmern Daten überträgt/empfängt. Auf der Teilnehmerseite wird zwischen optischen Netzabschlüssen (engl. "optical network termination", abgekürzt ONT) als Ausgangspunkt für weitere teilnehmerseitige Netzwerke, oder optischen Netzterminals (engl. "optical network unit", abgekürzt ONU) unterschieden, was im Zusammenhang der vorliegenden Erfindung jedoch nicht relevant ist. Im Folgenden wird allein der Begriff des Netzterminals ONU weiter verwendet. Die Verbindung zwischen den Netzabschlüssen OLT und den Netzterminals ONUs erfolgt über mindestens einen optischen Leistungsteiler oder Sternkoppler (engl. "splitter") mit dem Aufteilungsverhältnis 1:N (N = Anzahl der Teilnehmer). Der Datenfluss in einem PON erfolgt demnach in beiden Richtungen zwischen dem Netzabschluss des übergeordneten Netzes oder der Weitverkehrsstrecke und den zahlreichen optischen Netzabschlüssen auf der Teilnehmerseite. Der Signalfluss von der OLT-Einheit zu den optischen Netzterminals ONUs wird als Downstream bezeichnet. Die Übertragungsrichtung von der Teilnehmerseite ONU zur OLT wird als Upstream bezeichnet. Sowohl Upstream-Signale als auch Downstream-Signale werden meist auf einer einzigen Glasfaser übertragen, was als Duplex-Betrieb bezeichnet wird. Man verwendet dazu unterschiedliche Wellenlängen. In Downstream-Richtung erfolgt die Übertragung in einem ersten "Wellenlängenkanal" im Zeitmultiplex-Broadcast-Mode als kontinuierlicher Datenstrom. In Upstream-Richtung erfolgt die Übertragung in einem zweiten Wellenlängenkanal im Zeitmultiplexbetrieb burstweise. Über bestimmte Übertragungsprotokolle wird ausgehandelt, wann ein ONU senden darf. Die Reichweite ist derzeit typischerweise maximal 20 km, der Splittingfaktor maximal 1:64 und die Datenrate maximal 2,5 Gbit/s.

Die Weiterentwicklung dieser Systeme für höhere Datenraten ist in verschiedenen Standards festgelegt(z. B. BPON, EPON, GPON). Die neueste Entwicklung von PONs zu Datenraten von 10 Gbit/s mit Gesamtreichweiten von 100 km und einer Teilnehmerzahl von bis zu 1024 oder gar 2048 wird als SuperPON bezeichnet. Einen Überblick zum derzeitigen Entwicklungsstand von SuperPON ist in dem Artikel "SuperPON - Ein PON der nächsten Generation" von A. Stadler, M. Rasztovits-Wiech und S. Gianordoli erschienen im ITG-Fachbericht Band 189, VDE-Verlag, Seiten 57-62 gegeben. Durch den hohen Splitting-Faktor steigen die Dämpfungsverluste des optischen Signals in beiden Richtungen stark an. So sind bereits bei einem 1:2-Splittingfaktor ungefähr Dämpfungen von ca. 3-3,5 dB zu erwarten. Bei einem Gesamtaufteilungsverhältnis von 1:512, was neun Splitting-Stufen entspricht, werden Dämpfungen von maximal 31,5 dB erreicht. Wird die Streckendämpfung mitgerechnet, die in etwa bei 7 dB liegt, summieren sich die Dämpfungsverluste entsprechend. Die höhere Datenrate erfordert ferner eine höhere Empfangsleistung der optischen Receiver.

Da die Sendeleistung der Transmitter nicht weiter erhöht werden kann und sehr hohe Verluste aufgrund des hohen Splitting-Faktors zu überwinden sind, müssen die optischen Signale entlang der Strecke in beiden Richtungen verstärkt werden. Am einfachsten geschieht dies mit einem Erbium-dotierten Faserverstärker (EDFA).

EDFAs sind üblicherweise für unidirektionale Verstärkung ausgelegt, können aber auch bidirektional betrieben werden. Bei der Realisierung eines bidirektionalen Verstärkers mittels EDFAs existieren in der Literatur unterschiedliche Lösungen. In der internationalen Patentanmeldung WO 1995/15625 sind Anordnungen aus EDFAs, WDM-Kopplern, und optischen Isolatoren offenbart, die für optische Signale, die in zwei Wellenlängenkanälen und gegenläufiger Richtung propagieren, eine bidirektionale Verstärkung gewährleisten. In einem ersten Ausführungsbeispiel werden die Signale mittels eines ersten Kopplers räumlich voneinander getrennt, einzeln mittels eines EDFAs in ihrer jeweiligen Propagationsrichtung verstärkt und anschließend mittels eines zweiten Kopplers wieder zusammengefügt. In einem weiteren Ausführungsbeispiel werden die optischen Signale in beiden Richtungen in einer einzelnen Verstärkungsfaser verstärkt. Auch in der amerikanischen Patentanmeldung US2004/0228632 ist eine bidirektionale optische Verstärkeranordnung gezeigt, bei der die Verstärkung für zwei gegenläufige Signale in einer Verstärkungsfaser erfolgt. Innerhalb des WDM-Systems sind zwei Duplex Filter angeordnet, die der Zusammenfassung oder der Trennung der sende- oder empfangsseitigen Signale dienen. Die Filter weisen jeweils auf der Seite der Sender und Empfänger zwei Anschlüsse auf. Auf den anderen Seiten weisen die Filter jeweils einen gemeinsamen Anschluss für die gegenläufigen Signale auf, über den die Filter über eine mit Erbium dotierte Faser verbunden sind.

Neben der prinzipiellen Verstärkerauslegung stellen sich innerhalb der PON-Systeme erhöhte Anforderungen an eine Verstärkerregelung für die burstweisen Upstream-Signale, weil zwischen einzelnen Datenbursts längere Zeitlücken von beispielsweise mehreren 100 µs auftreten können und weil die Datenbursts Amplitudenunterschiede von bis zu 17 dB aufweisen können. Die charakteristischen Sättigungs- und Erholzeitkonstanten bei EDFAs liegen ebenfalls im Bereich zwischen 100 µs bis 10 ms, so dass Leistungsschwankungen des Eingangssignals zu Einschwingvorgängen (Transienten) im Ausgangssignal des EDFAs führen. Normalerweise wird mittels Gewinnregelungen ein konstanter Gewinn eingestellt, um die Inversion innerhalb des Dotier-Elements Erbium auf einem vorgegebenen Sollwert zu halten. Liegt am Eingang des Verstärkers kein Signal an, ist eine Gewinnregelung prinzipiell nicht möglich, da das Referenzsignal am Eingang des Verstärkers fehlt. Liegt nun durch Eintreffen eines Datenbursts wieder Signalleistung am EDFA-Eingang an, so ist die Pumpleistung zunächst nicht optimal zur Erhaltung eines konstanten Gewinns eingestellt. Es wird eine Zeitlang dauern, bis der Sollwert des Gewinns respektive der Ausgangsleistung erreicht ist. Diese starke Abhängigkeit der Verstärkerdynamik von der Eingangsleistung soll bei der Verstärkung der burstartigen Upstream-Datensignale unterbunden werden.

Daher wird nach einfachen Lösungen für eine optische Verstärkeranordnung gesucht, um eine möglichst optimale Verstärkung des kontinuierlichen Downstream-Signals und des burstförmigen Upstream-Signals zu erzielen.

Diese Aufgabe wird durch die Merkmale der Patentansprüche 1 und 2 und durch die Merkmale des Patentanspruchs 10 gelöst. Weitere Ausgestaltungen der Erfindung sind Gegenstand von Unteransprüchen.

Bei dem erfindungsgemäßen bidirektionalen optischen Verstärker handelt es sich um eine einfache Anordnung, die insbesondere für das burstförmige Upstream-Signal den Vorteil einer konstanten Verstärkung bietet. Erfindungsgemäß wird das Downstream-Signal dazu genutzt, um unabhängig vom Burstaufkommen einen stabilen Verstärkerbetrieb und eine konstante Inversion im Verstärkermedium einzustellen. Auf diese Weise wird beispielsweise ein weiterer Fülllaser, der benötigt würde, um die Inversion konstant zu halten, eingespart. Das derart konstant verstärkte Upstream-Signal kann bei Bedarf mittels des nachfolgenden Transponders nochmals verstärkt werden. Das Downstream-Signal erfährt vorteilhaft eine zweistufige Verstärkung. In der ersten unidirektionalen Verstärkerstufe wird die Rauschzahl optimiert, in der zweiten die Ausgangsleistung möglichst hoch eingestellt. Vorteilhaft werden für die gesamte Verstärkeranordnung prinzipiell nur zwei Pumplaser (einen für den unidirektionalen Verstärker und einen zweiten für den bidirektionalen Verstärker) benötigt. Dies bedeutet eine erhebliche Kostenersparnis im Vergleich zu einer Anordnung, bei der beispielsweise zusätzlich zu den EDFA-Pumplasern ein Fülllaser eingespeist würde.

Vorteilhaft werden als optische Verstärker innerhalb der erfindungsgemäßen Verstärkeranordnung mit Erbium-Ionen dotierte Faserverstärker eingesetzt, weil sie am leichtesten in das optische Netzwerk zu integrieren sind. Der Einsatz sowohl von uni- als auch von bidirektionalen EDFAs als Teile der erfindungsgemäßen Verstärkeranordnung stellt eine kostengünstige und äußerst effektive Realisierungsvariante dar.

In einer besonders vorteilhaften Ausgestaltung der Erfindung wird in einem bidirektional betriebenen EDFA das Downstream-Signal und das Upstream-Signal in beiden Richtungen in einer Verstärkungsfaser verstärkt.

In einer weiteren vorteilhaften Ausführungsvariante wird das Upstream-Signal durch den Einsatz eines Regenerators nochmals verstärkt, gegebenenfalls geformt und auf einen anderen Wellenlängenkanal umgesetzt. Die Wellenlängenumsetzung ist insbesondere dann von Vorteil, wenn die bidirektionale Verstärkeranordnung an ein Metro-Netzwerk angeschlossen wird, das im Wellenlängen-Multiplexbetrieb betrieben wird. Auf diese Weise können Kapazitäten im Netzwerk erweitert werden.

In einer Ausgestaltung der Erfindung werden die EDFAs derart geregelt, dass in Downstream-Richtung der erste unidirektionale Verstärker eine geringe Rauschzahl bei konstanter Ausgangsleistung aufweist und der bidirektionale Verstärker für das Downstream-Signal eine konstante und ausreichend hohe Ausgangsleistung aufweist. Durch die Verstärkerregelungen kann ein optimaler Betrieb erreicht werden.

Wird auf der Seite der Teilnehmer bereits eine erste Splitter-Einrichtung mit einem relativ geringen Aufsplitting-Verhältnis von beispielsweise 1:8 fix in den Verstärkeraufbau integriert, werden Reflexionen und Streueffekte von dem nachgeschalteten Fasernetzwerk gedämpft. Dadurch kann die Verstärkung des bidirektionalen Verstärkers größer gewählt werden. Auch wird die Leistung in Richtung der Teilnehmer gedämpft, so dass aus Sicherheitsgründen keine Laserabschaltmechanismen benötigt werden. Je hochwertiger dieser erste Splitter gewählt wird, desto geringer sind die Toleranzanforderungen an folgende Splitter. Da der in Downstream-Richtung sich anschließende Netzwerkteil rein passiv ausgelegt ist, fallen geringe Wartungskosten an und Kostenvorteile werden ausgeschöpft.

Wird auf der Seite der zentralen Vermittlungseinheit die erste Verzweigungs- und Zusammenfassungs-Einheit durch einen optischen Add/Drop-Multiplexer ersetzt, ergibt sich der Vorteil, dass das Downstream-Signal einem Metro-Kernnetz entnommen und das Upstream-Signal dem Metro-Kernnetz hinzugefügt werden kann. Durch den Anschluss an ein Metro-Kernnetz, das vorzugsweise im Wellenlängen-Multiplex-Betrieb ausgeführt ist, erfolgt eine effektivere Ausnutzung des Netzwerks und erhebliche Datenmengen mehrer Access-Verbindungen können transportiert werden.

Weitere vorteilhafte Ausbildungen der Erfindung sind in den übrigen Ansprüchen angegeben.

Ausführungsbeispiele der Erfindung werden anhand von Figuren näher erläutert.

Es zeigen
- Fig. 1: ein Prinzipschaltbild der bidirektionalen optischen Verstärkeranordnung
- Fig. 2a, b: zwei Ausführungsvarianten der Anschlusseinrichtungen auf der Teilnehmerseite
- Fig. 3a, b: zwei Ausführungsvarianten der Anschlusseinrichtungen auf der Seite der zentralen Vermittlungseinrichtung OLT mit Metro-Netzwerk
- Fig. 4: Ausführungsvariante der bidirektionalen optischen Verstärkeranordnung mit optischem Verstärker im angeschlossenen Metro-Netzwerk

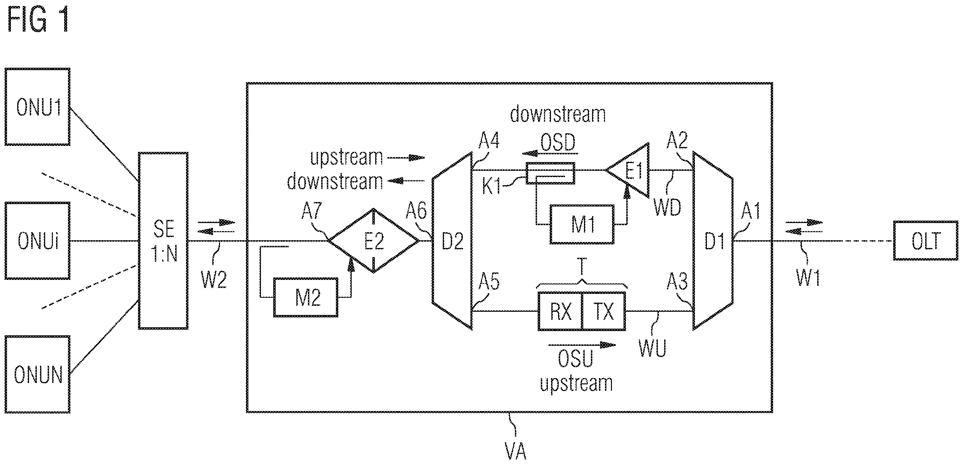

Wie in Fig. 1 dargestellt besteht die erfindungsgemäße bidirektionale optische Verstärkeranordnung VA prinzipiell aus zwei Teilen. In einem ersten Teil, bestehend aus zwei Verzweigungs- und Zusammenfassungseinheiten D1 und D2, aus einem unidirektionalen optischen Verstärker E1 und aus einem Transponder T werden die optischen Downstream- und Upstream-Signale getrennt voneinander verstärkt. In einem zweiten Teil werden die beiden gegenläufigen Signale in einem bidirektionalen Verstärker E2 verstärkt.

Die erfindungsgemäße optische Verstärkeranordnung ist vor dem Hintergrund der Realisierung eines SuperPON-Systems entstanden, bei dem in Downstream-Richtung Datenraten von bis zu 10 GBit/s bei einer mittleren Kanalleistung von 1 mW übertragen werden. In Upsteram-Richtung sind Datenraten von bis zu 2,5 GBit/s bei einer mittleren Kanalleistung von 4 mW vorgesehen. In Downstream-Richtung betrachtet führt von der Seite des ersten Netzabschlusses OLT eine bidirektionale Verbindung W1 beispielsweise eine Glasfaser zu einer ersten Verzweigungs- und Zusammenfassungseinheit D1. Dabei handelt es sich beispielsweise um ein optisches Duplexfilter, in dem das optische downstream-Signal OSD vom optischen Upstream-Signal OSU getrennt wird. Von diesem Duplex-Filter D1 führen zwei Verbindungen WD und WU über die Anschlüsse A2 und A3 zu den Anschlüssen A4 und A5 einer zweiten Verzweigungs- und Zusammenfassungseinheit D2, wobei es sich ebenfalls um ein Filter oder eine Multiplexereinheit handelt, in der die Upstream- und Downstream-Signale voneinander getrennt oder zusammengefasst werden.

Im Verbindungspfad WD für das Downstream-Signal OSD ist ein unidirektionaler optischer Verstärker E1 angeordnet. Vorzugsweise wird als Verstärker ein EDFA eingesetzt. Hinter dem Verstärker E1 wird ein Teil des verstärkten Downstream-Signals über einen Koppler K1 ausgekoppelt und einem Leistungsmonitor M1 zugeführt. Die Verstärkung von E1 wird mit Hilfe des Leistungsmonitors M1 so geregelt, dass die Ausgangsleistung von E1 einen konstanten Wert erreicht. Ferner wird der Verstärker derart ausgelegt, dass eine gute Rauschzahl erreicht wird. Der optische Verstärker kann ko- oder kontradirektional mittels einer oder mehreren Laserquellen gepumpt werden. Die Pumpquelle ist in Fig. 1 nicht dargestellt. Als Verstärkeraufbauten kommen herkömmliche ein- oder mehrstufige EDFA-Aufbauten je nach Anforderungen und Randbedingungen zum Einsatz. Ferner können entlang der Verbindung WD oder innerhalb des Verstärkers E1 Isolatoren eingesetzt sein. Der Einsatz von Wellenlängenfiltern im Pfad WD ist ebenfalls denkbar. Alternativ kann der Durchlassbereich des Duplexfilters derart gewählt werden, dass es ebenfalls als geeignetes Wellenlängenfilter wirkt.

Nach Durchlaufen des Verstärkers D1 wird das Downstream-Signal OSD über das optische Duplexfilter D2 mit dem Upstream-Signal OSU zusammengefasst und dem bidirektionalen optischen Verstärker E2 zugeführt. Auch E2 ist vorzugsweise als EDFA realisiert. Die Verstärkung von EDFA E2 wird mit Hilfe des Leistungsmonitors M2 so eingestellt, dass die Ausgangsleistung von E2 in Downstream-Richtung einen konstanten und ausreichend hohen Wert erreicht. Dabei ist zu berücksichtigen, dass die Ausgangsleistung von EDFA E1 so eingestellt wird, dass die Verstärkung von E2 dennoch ausreichend gering ist, um weder eine Schwingbedingung für E2 zu erfüllen, noch merkliche Signalverzerrungen zu verursachen. Durch die Regelung der Ausgangsleistungen von E1 und E2 resultiert ein konstanter Gewinn für den Verstärker E2. Ein Verstärkungswert von in etwa 20 dB sollte für den Verstärker E2 nicht überschritten werden. Die Ausgangsleistung von EDFA E1 wird weiterhin so eingestellt, dass die Eingangsleistung von E2 in Downstream-Richtung wesentlich größer ist als in Upstream-Richtung ist. Dadurch ist gewährleistet, dass das burstförmige Upstream-Signal eine konstante Verstärkung erfährt und das Downstream-Signal nicht durch Wechselwirkungen im EDFA E2 mit dem Upstream-Signal gestört wird. Das Downstream-Signal sorgt demnach für eine konstante Inversion des Verstärkers E2 und ein konstanter Arbeitspunkt ist eingestellt. Der EDFA E2 wird bevorzugt in Upstream-Richtung gepumpt, weil so in Upstream-Richtung eine bessere Rauschzahl erreicht wird.

Je nach Datenrate können innerhalb der bidirektionalen Verstärkeranordnung VA in beiden Signal-Richtungen Mittel zur Dispersionskompensation wie Gitter oder dispersionskompensierende Fasern eingesetzt werden. Insbesondere in Downstream-Richtung ist aufgrund der höheren Datenrate eine Anordnung einer dispersionskompensierenden Faser innerhalb des Pfades WD oder innerhalb des Verstärkers E1 denkbar.

In Upstream-Richtung werden die von den einzelnen Teilnehmern ONU1, ONU2 bis ONUN kommenden burst-förmigen Upstream-Signale einer Splitter-Einrichtung SE (Splittingverhältnis 1:N) zu einem Gesamt-Upstream-Signal OSU zusammengefasst. Das Upstream-Signal OSU wird im EDFA E2 verstärkt, und anschließend im Duplexer D2 vom Downstream-Signal OSD getrennt. Im Verbindungspfad WU zum nächsten Duplexer D1 ist ein geeigneter Regenerator RxTx angeordnet, z. B. ein burst-tauglicher Transponder T. Das im Transponder empfangene optische Signal weist zwei "logische Zustände" auf, die der logischen 1 oder 0 entsprechen, und einen dritten Zustand zwischen den Datenbursts, bei dem alle Sendelaser der ONUs ausgeschaltet sind. In einer Ausführungsvariante werden diese "dreistufigen" optischen Datenbursts in einem optisch-elektrischen Wandler in elektrische Datenbursts umgesetzt und einem Begrenzer-Verstärker oder einer Schwellwertschaltung zugeführt. Dort werden sie in binäre Datenbursts umgesetzt und anschließend elektro-optisch gewandelt. Die Laser, die zur elektrooptischen Wandlung im Transponder eingesetzt werden, können bei dieser Ausführungsvariante stets angeschaltet bleiben und ein kontinuierliches Signal mit einheitlicher Amplitude senden. Auf diese Weise erzeugt der Transponder trotz eines in seiner Amplitude stark variierenden Eingangssignals ein in seiner Amplitude annähernd konstantes Ausgangssignal. Zusätzlich sendet der Regenerator bei längeren Empfangspausen ein Füllsignal (beispielsweise eine "0-1"-Folge) aus. Eine 3R-Regeneration im Transponder ist nicht zwingend erforderlich. Eine Umsetzung der Wellenlänge des Upstream-Signals OSU innerhalb des Transponders ist vorteilhaft, wenn das Upstream-Signal im Anschluss einem WDM-Netzwerk zugeführt wird. Das derart regenerierte Gesamt-Upstream-Signal wird anschließend im Duplexer D1 mit dem Downstream-Signal vereinigt.

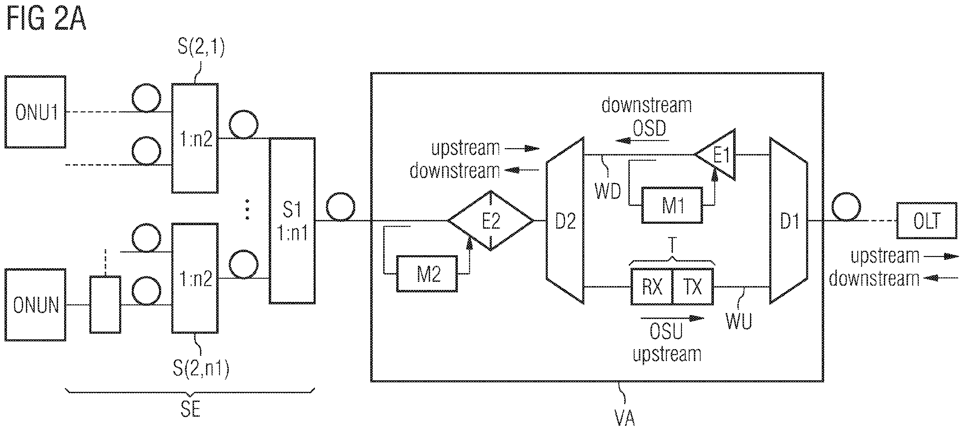

Die bidirektionale optische Verstärkeranordnung VA ist in einem PON-Netzwerk zwischen dem ersten Netzabschluss der zentralen Vermittlungseinheit OLT und einer Splitter-Einrichtung SE angeordnet. Die Splitter-Einrichtung SE ist an die einzelnen Netzterminals ONU1, ONU2, ... ONUN der N Teilnehmer angeschlossen, die den zweiten Netzabschluss bilden. In der Regel wird es sich bei der Splitter-Einrichtung SE um eine Anordnung handeln, die aus mehreren hintereinander geschalteten Einzelsplittern oder Sternkopplern besteht. Dies ist in Fig. 2a dargestellt. Auf der Teilnehmerseite sind an jeden Ausgang eines ersten Splitters S1 mit dem Splittingfaktor 1:n1 jeweils weitere Splitter S(2,1) bis s(2,n1) über jeweils eine eigene Glasfaser angeschlossen. Der Gesamt-Splitting-Faktor 1:N wird dabei so aufgeteilt, dass N = n1*n2*..*ni ist. Die Access-Verbindungen zwischen dem ersten Koppler und den Teilnehmeranschlüssen ONUs sind rein passiv ausgeführt und brauchen keine Wartung. Auf allen Access-Verbindungen hinter der erfindungsgemäßen Verstärkeranordnung VA werden dieselben Wellenlängen für diesselben Dienste verwendet (für Upstream- und Downstream-Signale jedoch getrennte Wellenlängen), so dass einheitliche Netzterminals ONUs verwendet werden können.

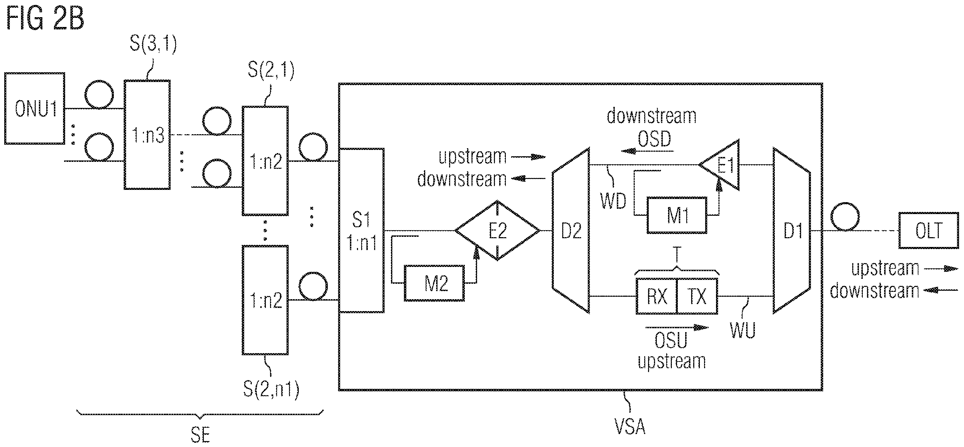

Die Entfernung zwischen den Netzterminals ONUs und der optischen Verstärkeranordnung VA beträgt üblicherweise bis zu 30 km. In den Figuren 2a und 2b ist diese Weglänge auf die optischen Weglängen zwischen den Splittern verteilt, was durch die zahlreichen Faserschleifen angedeutet ist. Dabei können zwischen den einzelnen Splittern auch größere Entfernungen von einigen km zurückzulegen sein.

In einer weiteren Ausführungsvariante wird der erste Splitter S1 auf der Teilnehmerseite in die Verstärkeranordnung VA integriert. In Fig. 2b ist das Blockschaltbild einer solchen Verstärker- und Splitteranordnung VSA abgebildet. Der erste Splitter S1 ist hier auf der Teilnehmerseite unmittelbar im Anschluss an den Verstärker E2 angeordnet. Bei dem Splitter S1 wird ein kleineres Aufteilungsverhältnis von beispielsweise 1:8 gewählt. Weitere Splitter werden entlang der Strecke zu den Netzterminals ONUs über die oben genannte Weglänge von 30 km angeordnet. Der Einbau des ersten Splitters S1 in die Verstärkeranordnung VA bietet vielfache Vorteile für das Übertragungssystem:
a) Reflexionen und Rayleigh-Streuung werden durch den Splitter S1 gedämpft. Dadurch kann die Verstärkung von E2 auch größer als die übliche Grenze von 20 dB gewählt werden.
b) Die Unterdrückung der stimulierten Brillouin-Streuung für das Downstream-Signal wird vereinfacht oder entfällt.
c) Auch andere nichtlineare Verzerrungen für das Downstream-Signal werden verringert.
d) Die optische Leistung am Ausgang der SVE in Downstream-Richtung ist geringer und entspricht unter Umständen sogar Laserklasse 1. Somit werden keine Laserabschaltemechanismen auf der Teilnehmerseite benötigt.
e) Wird der Splitter S1 sehr hochwertig mit gleichförmiger Dämpfung gewählt, so fallen die Anforderungen an die zahlreichen nachfolgenden Splitter.

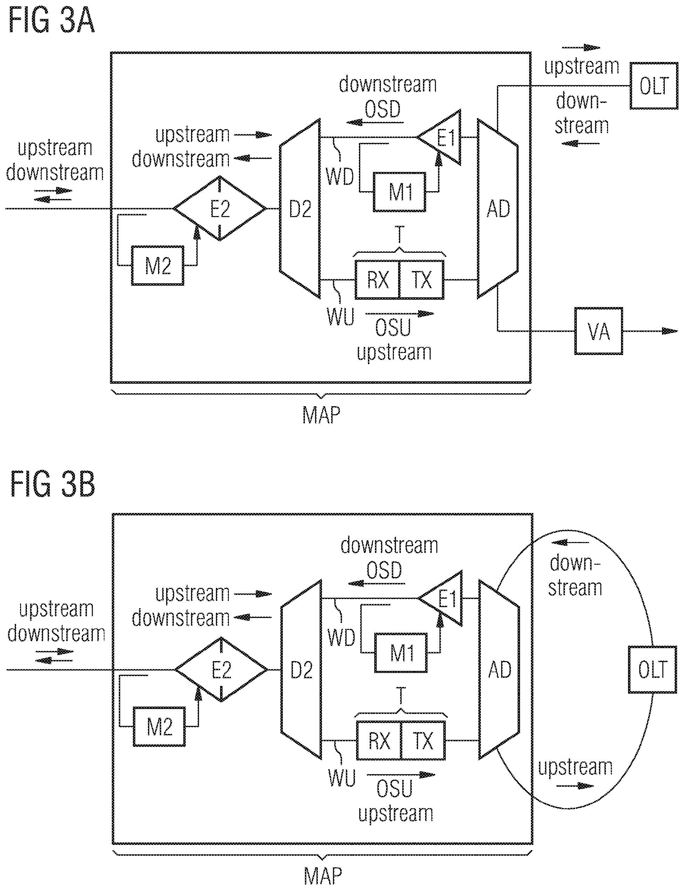

In Fig. 3 sind zwei Ausführungsbeispiele für den Anschluss der erfindungsgemäßen Verstärkeranordnung VA oder VSA auf der Seite der zentrale Vermittlungs- und Management-Einheit OLT angegeben. In der Regel wird die erfindungsgemäße Verstärkeranordnung VA oder VSA auf dieser Seite an ein Metro-Netzwerk angeschlossen sein. Um einen Zugang zu dem Metro-Netzwerk zu erhalten, wird statt der Verzweigungs- und Zusammenfassungseinheit D1 der Verstärkeranordnung VA oder VSA ein optischer Add/Drop Multiplexer AD eingesetzt. Die Verstärkeranordnung VA oder VSA ist in diesem Fall gleichzusetzen mit einer so genannten Metro-Anschlusseinrichtung (engl. "Metro-Access-Point"), abgekürzt MAP). Die MAP stellt den Schnittpunkt zwischen dem Metro-Netzwerk und dem Access-Bereich dar. Im Metro-Bereich erfolgt die Übertragung vorteilhaft im Wellenlängen-Multiplex-Betrieb, so dass die erheblichen Datenmengen mehrerer Access-Verbindungen transportiert werden können. Die Management- und Vermittlungszentrale ist Teil dieses Metro-Netzwerkes und steuert von da auch den Datenverkehr zu den einzelnen MAPs mit deren angeschlossenen ONUs. In Fig. 3a sind mehrere VA oder VSA respektive MAPs entlang einer bidirektional betriebenen Glasfaserverbindung angeordnet. Dabei kann es sich entweder um zwei Glasfasern handeln, in denen eventuell nur eine Wellenlänge betrieben wird oder um eine Faser mit unterschiedlichen Wellenlängenkanälen. In Fig. 3b ist die MAP an einen unidirektionalen WDM-Glasfaserring angeschlossen. Entlang des Glasfaserrings können weiter Verstärkeranordnungen VA oder VSA respektive MAPs angeordnet sein.

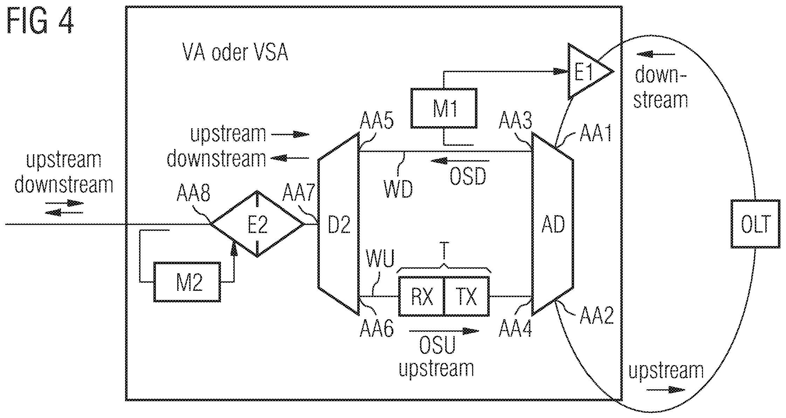

In Fig. 4 ist eine weitere Ausführungsvariante der erfindungsgemäßen Verstärkeranordnung VA oder VSA, wenn sie als Metro-Access-Point MAP ausgebildet ist, dargestellt. Hier ist der optische Verstärker E1 aus dem Verbindungspfad WD innerhalb des Metro-Ringnetzwerkes in Downstream-Richtung vor dem Add/Drop-Multiplexer AD angeordnet. In diesem Fall dient E1 als Inline-Verstärker für die Signale, die an dieser Stelle anliegen. Die anliegenden Signale sind unterschiedlich, da in jeder MAP ein Downstream-Signal abgezweigt und ein Upstream-Signal zum Metro-Netzwerk hinzukommt. Entlang des Verbindungspfades WD für das Downstream-Signal wird ein Teil des Signals OSD abgezweigt und einem Leistungsmonitor M1 zugeführt, der den Verstärker E1 regelt. Der Vorteil dieser Ausführungsvariante liegt darin, dass mittels E1 die Einfügedämpfung des Add/Drop-Multiplexers AD und die Faserdämpfung zwischen den einzelnen MAPs kompensiert werden. Auf diese Weise kann sowohl die Anzahl der MAPs im Netzwerk, als auch die Reichweite für die Signalübertragung innerhalb des Netzwerks erhöht werden.

## Patentansprüche

1. Bidirektionale optische Verstärkeranordnung (VA),
die zwischen einem ersten Netzabschluss (OLT) und einem zweiten Netzabschluss (ONU) angeordnet ist und in einer Richtung von einem optischen Downstream-Signal (OSD) und in der Gegenrichtung von einem optischen Upstream-Signal (OSU) durchlaufen wird,
**dadurch gekennzeichnet,**
**dass** auf der Seite des ersten Netzabschlusses (OLT) eine erste Verzweigungs- und Zusammenfassungseinheit (D1) angeordnet ist,
**dass** diese Einheit (D1) auf der Seite des ersten Netzabschlusses (OLT) mindestens einen gemeinsamen Anschluss (A1) für beide Signale (OSD und OSU) aufweist und auf der Seite des zweiten Netzabschlusses (ONU) einen Ausgang (A2) für das Downstream-Signal (OSD) und einen Eingang (A3) für das Upstream-Signal (OSU) aufweist,
**dass** der Ausgang (A2) für das Downstream-Signal (OSD) über einen unidirektionalen optischen Verstärker (E1) mit einem Eingang (A4) für das Downstream-Signal (OSD) einer zweiten Verzweigungs- und Zusammenfassungseinheit (D2) verbunden ist, dass zwischen dem unidirektionalen optischen Verstärker (E1) und dem Eingang (A4) eine Leistungsmonitoreinrichtung (M1) angeschlossen ist, deren Ausgang mit dem unidirektionalen optischen Verstärker (E1) verbunden ist,
**dass** ein Ausgang (A5) für das Upstream-Signal (OSU) der zweiten Verzweigungs- und Zusammenfassungseinheit (D2) über einen Transponder (T) mit dem Eingang (A3) für das Upstream-Signal (OSU) der ersten Verzweigungs- und Zusammenfassungseinheit (D1) verbunden ist,
**dass** die zweite Verzweigungs- und Zusammenfassungseinheit (D2) auf der Seite des zweiten Netzabschlusses (ONU) einen gemeinsamen Anschluss (A6) für beide Signale (OSD und OSU) aufweist, der mit einem bidirektionalen optischen Verstärker (E2) verbunden ist, von dem aus ein gemeinsamer Anschluss (A7) für beide Signale (OSD und OSU) zum zweiten Netzabschluss (ONU) führt,
**dass** an dem mit dem gemeinsamen Anschluss (A7) verbundenen Verbindungspfad eine zweite Leistungsmonitoreinrichtung (M2) angeschlossen ist, deren Ausgang mit dem bidirektionalen optischen Verstärker (E2) verbunden ist, und
**dass** die optischen Verstärker (E1, E2) derart geregelt sind, dass in Downstream-Richtung der unidirektionale optische Verstärker (E1) eine geringe Rauschzahl aufweist und der bidirektionale optische Verstärker (E2) für das Downstream-Signal eine konstante und hohe Ausgangsleistung aufweist.

2. Bidirektionale optische Verstärkeranordnung,
die zwischen einem ersten Netzabschluss (OLT) und einem zweiten Netzabschluss (ONU) angeordnet ist und in einer Richtung von einem optischen Downstream-Signal (OSD) und in der Gegenrichtung von einem optischen Upstream-Signal (OSD) durchlaufen wird,
**dadurch gekennzeichnet,**
**dass** der erste Netzabschluss (OLT) in einem Metro-Ringnetzwerk angeordnet ist,
**dass** das Downstream-Signal (OSD) von dem ersten Netzabschluss (OLT) einem ersten Anschluss (AA1) einer Add/Drop-Einrichtung (AD) zugeführt wird,
**dass** diesem ersten Anschluss (AA1) der Add/Drop-Einrichtung (AD) ein unidirektionaler optischer Verstärker (E1) für das Downstream-Signal (OSD) unmittelbar vorgeschaltet ist,
**dass** das Upstream-Signal (OSU) von einem zweiten Anschluss (AA2) der Add/Drop-Einrichtung (AD) dem ersten Netzabschluss (OLT) zugeführt wird,
**dass** die Add/Drop-Einrichtung (AD) auf der Seite des zweiten Netzabschlusses (ONU) einen Ausgang (AA3) für das Downstream-Signal (OSD) und einen Eingang (AA4) für das Upstream-Signal (OSU) aufweist,
**dass** der Ausgang (AA3) für das Downstream-Signal (OSD) mit einem Eingang (AA5) für das Downstream-Signal (OSD) einer Verzweigungs- und Zusammenfassungseinheit (D2) verbunden ist, dass an diesen Verbindungspfad (WD) eine Leistungsmonitoreinrichtung (M1) angeschlossen ist, deren Ausgang mit dem unidirektionalen optischen Verstärker (E1) verbunden ist,
**dass** ein Ausgang (AA6) für das Upstream-Signal (OSU) der Verzweigungs- und Zusammenfassungseinheit (D2) über einen Transponder (T) mit dem Eingang (AA4) für das Upstream-Signal (OSU) der Add/Drop-Einrichtung (AD) verbunden ist,
**dass** die zweite Verzweigungs- und Zusammenfassungseinheit (D2) auf der Seite des zweiten Netzabschlusses (ONU) einen gemeinsamen Anschluss (AA7) für beide Signale (OSD und OSU) aufweist, der mit einem bidirektionalen optischen Verstärker (E2) verbunden ist, von dem aus ein gemeinsamer Anschluss (AA8) für beide Signale (OSD und OSU) zum zweiten Netzabschluss (ONU) führt,
**dass** an dem mit dem gemeinsamen Anschluss (AA8) verbundenen Verbindungspfad eine zweite Leistungsmonitoreinrichtung (M2) angeschlossen ist, deren Ausgang mit dem bidirektionalen optischen Verstärker (E2) verbunden ist, und
**dass** die optischen Verstärker (E1, E2) derart geregelt sind, dass in Downstream-Richtung der unidirektionale optische Verstärker (E1) eine geringe Rauschzahl aufweist und der bidirektionale optische Verstärker (E2) für das Downstream-Signal eine konstante und hohe Ausgangsleistung aufweist.

3. Bidirektionale optische Verstärkeranordnung nach Anspruch 1 oder 2,
**dadurch gekennzeichnet,**
**dass** der unidirektionale optische Verstärker (E1) und der bidirektionale optische Verstärker (E2) als Faserverstärker ausgebildet sind, deren Verstärkungsfasern mit einem Element der Seltenen Erden vorzugsweise mit Erbium dotiert sind.

4. Bidirektionale optische Verstärkeranordnung nach Anspruch 3,
**dadurch gekennzeichnet,**
**dass** der bidirektionale optische Verstärker (E2) derart ausgestaltet ist, dass das Downstream-Signal (OSD) und das Upstream-Signal (OSU) in beiden Richtungen in einer gemeinsamen Verstärkungsfaser verstärkt werden.

5. Bidirektionale optische Verstärkeranordnung nach Anspruch 1 oder 2,
**dadurch gekennzeichnet,**
**dass** der Transponder (T) für das Upstream-Signal (OSU) einen Datenregenerator und/oder Wellenlängenumsetzer enthält.

6. Bidirektionale optische Verstärkeranordnung nach Anspruch 1 oder 2,
**dadurch gekennzeichnet,**
**dass** der Transponder (T) derart ausgebildet ist, dass er ein binäres Upstream-Signal (OSU) abgibt.

7. Bidirektionale optische Verstärkeranordnung Anspruch 1 oder 2,
**dadurch gekennzeichnet,**
**dass** auf der Seite des zweiten Netzabschlusses (ONU) an den bidirektionalen optischen Verstärker (E2) ein optischer Splitter (S1) unmittelbar angeschlossen ist.

8. Bidirektionale optische Verstärkeranordnung nach Anspruch 1,
**dadurch gekennzeichnet,**
**dass** auf der Seite des ersten Netzabschlusses (OLT) die erste Verzweigungs- und Zusammenfassungseinheit (D1) als optische Add/Drop-Einrichtung (AD) ausgebildet ist, die auf der Seite des ersten Netzabschlusses (OLT) mindestens zwei Anschlüsse aufweiset, so dass das Downstream-Signal (OSD) einem Metro-Kernnetz entnommen und das Upstream-Signal (OSU) dem Metro-Kernnetz hinzugefügt wird.

9. Optisches Übertragungssystem,
mit einer an ein übergeordnetes optisches Übertragungsnetz (MET) angeschlossenen zentralen Vermittlungseinrichtung (OLT), die über eine optische Splitting-Einrichtung (SE) mit einer Vielzahl von optischen Netzterminals (ONU1, ONU2, ...) verbunden ist,
in dem ein optisches Downstream-Signal (OSD) in Downstream-Richtung von der zentralen Vermittlungseinrichtung (OLT) zu den optischen Netzterminals (ONU1, ONU2, ...) im Zeitmultiplex-Betrieb übertragen wird, und
in dem ein optisches Upstream-Signal (OSU) in Upstream-Richtung von den optischen Netzterminals (ONU1, ONU2, ...) zu der zentralen Vermittlungseinrichtung (OLT) burstweise übertragen werden,
**dadurch gekennzeichnet,**
**dass** zwischen der zentralen Vermittlungseinrichtung (OLT) und der optischen Splitting-Einrichtung (SE) eine bidirektionale optische Verstärkeranordnung (VA) nach einem der Ansprüche 1 bis 8 angeordnet ist.

10. Optisches Übertragungssystem nach Anspruch 9, **dadurch gekennzeichnet,**
**dass** als Bestandteil der bidirektionalen optischen Verstärkeranordnung (VA) auf der Seite der Netzterminals (ONU1, ONU2, ...) an den bidirektionalen optischen Verstärker (E2) ein erster optischer Splitter (S1) angeschlossen ist, der das Downstream-Signal (OSD) in einem ersten Verhältnis aufteilt und das Upstream-Signal (OSU) entsprechend zusammenfasst.

11. Optisches Übertragungssystem nach Anspruch 9 oder 10, **dadurch gekennzeichnet,**
**dass** die Splittingeinrichtung (SE) derart ausgestaltet ist, dass sich an die Ausgänge des ersten Splitters (S1) eine Folge von weiteren Splittern anschließt.

12. Optisches Übertragungssystem nach einem der vorhergehenden Ansprüche,
**dadurch gekennzeichnet,**
**dass** die optischen Verbindungen zwischen der ersten Splittingeinrichtung (S1) und den optischen Netzterminals (ONU1..) frei von aktiven optischen Elementen ist.

13. Optisches Übertragungssystem nach Anspruch 9,
**dadurch gekennzeichnet,**
**dass** das übergeordnete optische Übertragungsnetz (MET) im Wellenlängen-Multiplex-Betrieb ausgebildet ist.

14. Optisches Übertragungssystem nach Anspruch 13,
**dadurch gekennzeichnet,**
**dass** die bidirektionale optische Verstärkeranordnung (VA) als wellenlängenselektive Metro-Anschlusseinrichtung vorgesehen ist.

## Claims

1. Bidirectional optical amplifier arrangement (VA)
which is arranged between a first network termination (OLT) and a second network termination (ONU) and is passed through in one direction by an optical downstream signal (OSD) and in the opposite direction by an optical upstream signal (OSU),
**characterized**
**in that** a first branching and combination unit (D1) is arranged at the first network termination (OLT) end,
**in that** this unit (D1) has at least one common connection (A1) for both signals (OSD and OSU) at the first network termination (OLT) end, and has an output (A2) for the downstream signal (OSD) and an input (A3) for the upstream signal (OSU) at the second network termination (ONU) end,
**in that** the output (A2) for the downstream signal (OSD) is connected via a unidirectional optical amplifier (E1) to an input (A4) for the downstream signal (OSD) from a second branching and combination unit (D2),
**in that** a power monitoring device (M1) is connected between the unidirectional optical amplifier (E1) and the input (A4), the output of which power monitoring device is connected to the unidirectional optical amplifier (E1),
**in that** an output (A5) for the upstream signal (OSU) from the second branching and combination unit (D2) is connected via a transponder (T) to the input (A3) for the upstream signal (OSU) of the first branching and combination unit (D1),
**in that** the second branching and combination unit (D2) has a common connection (A6) for both signals (OSD and OSU) at the second network termination (ONU) end, which connection (A6) is connected to a bidirectional optical amplifier (E2), from which a common connection (A7) for both signals (OSD and OSU) leads to the second network termination (ONU),
**in that** a second power monitoring device (M2) is connected to the connection path connected to the common connection (A7), the output of which power monitoring device is connected to the bidirectional optical amplifier (E2), and
**in that** the optical amplifiers (E1, E2) are controlled in such a manner that, in the downstream direction, the unidirectional optical amplifier (E1) has a low noise figure and the bidirectional optical amplifier (E2) has constant and high output power for the downstream signal.

2. Bidirectional optical amplifier arrangement
which is arranged between a first network termination (OLT) and a second network termination (ONU) and is passed through in one direction by an optical downstream signal (OSD) and in the opposite direction by an optical upstream signal (OSU),
**characterized**
**in that** the first network termination (OLT) is arranged in a metro ring network,
**in that** the downstream signal (OSD) is supplied from the first network termination (OLT) to a first connection (AA1) of an add/drop device (AD),
**in that** a unidirectional optical amplifier (E1) for the downstream signal (OSD) is connected immediately upstream of this first connection (AA1) of the add/drop device (AD),
**in that** the upstream signal (OSU) is supplied from a first connection (AA2) of the add/drop device (AD) to the first network termination (OLT),
**in that** the add/drop device (AD) has an output (AA3) for the downstream signal (OSD) and an input (AA4) for the upstream signal (OSU) at the second network termination (ONU) end,
**in that** the output (AA3) for the downstream signal (OSD) is connected to an input (AA5) for the downstream signal (OSD) from a branching and combination unit (D2),
**in that** a power monitoring device (M1) is connected to this connecting path (WD) and its output is connected to the unidirectional optical amplifier (E1),
**in that** an output (AA6) for the upstream signal (OSU) from the branching and combination unit (D2) is connected via a transponder (T) to the input (AA4) for the upstream signal (OSU) of the add/drop device (AD), and
**in that** the second branching and combination unit (D2) has a common connection (AA7) for both signals (OSD and OSU) at the second network termination (ONU) end, which connection (AA7) is connected to a bidirectional optical amplifier (E2), from which a common connection (AA8) for both signals (OSD and OSU) leads to the second network termination (ONU),
**in that** a second power monitoring device (M2) is connected to the connection path connected to the common connection (AA8), the output of which power monitoring device is connected to the bidirectional optical amplifier (E2), and
**in that** the optical amplifiers (E1, E2) are controlled in such a manner that, in the downstream direction, the unidirectional optical amplifier (E1) has a low noise figure and the bidirectional optical amplifier (E2) has constant and high output power for the downstream signal.

3. Bidirectional optical amplifier arrangement according to Claim 1 or 2,
**characterized**
**in that** the unidirectional optical amplifier (E1) and the bidirectional optical amplifier (E2) are in the form of fibre amplifiers, whose amplification fibres are doped with an element from the rare earths, preferably with erbium.

4. Bidirectional optical amplifier arrangement according to Claim 3,
**characterized**
**in that** the bidirectional optical amplifier (E2) is designed such that the downstream signal (OSD) and the upstream signal (OSU) are amplified in both directions in a common amplification fibre.

5. Bidirectional optical amplifier arrangement according to Claim 1 or 2,
**characterized**
**in that** the transponder (T) for the upstream signal (OSU) contains a data regenerator and/or wavelength converter.

6. Bidirectional optical amplifier arrangement according to Claim 1 or 2,
**characterized**
**in that** the transponder (T) is designed such that it emits a binary upstream signal (OSU).

7. Bidirectional optical amplifier arrangement according to Claim 1 or 2,
**characterized**
**in that** an optical splitter (S1) is connected directly to the bidirectional optical amplifier (E2) at the second network termination (ONU) end.

8. Bidirectional optical amplifier arrangement according to Claim 1,
**characterized**
**in that** the first branching and combination unit (D1) at the first network termination (OLT) end is in the form of an optical add/drop device (AD) which has at least two connections at the first network termination (OLT) end, such that the downstream signal (OSD) is taken from a metro core network, and the upstream signal (OSU) is added to the metro core network.

9. Optical transmission system,
having a central switching device (OLT) which is connected to a higher-level optical transmission network (MET) and is connected via an optical splitter device (SE) to a multiplicity of optical network terminals (ONU1, ONU2, ...)
in which an optical downstream signal (OSD) is transmitted in the downstream direction from the central switching device (OLT) to the optical network terminals (ONU1, ONU2, ...) using the time-division multiplexing mode, and
in which an optical upstream signal (OSU) is transmitted in bursts in the upstream direction from the optical network terminals (ONU1, ONU2, ...) to the central switching device (OLT),
**characterized**
**in that** a bidirectional optical amplifier arrangement (VA) according to one of Claims 1 to 8 is arranged between the central switching device (OLT) and the optical splitter device (SE).

10. Optical transmission system according to Claim 9,
**characterized**
**in that** a first optical splitter (S1) which splits the downstream signal (OSD) in a first ratio and combines the upstream signal (OSU) in a corresponding manner is connected to the bidirectional optical amplifier (E2), as a component of the bidirectional optical amplifier arrangement (VA) at the network terminal (ONU1, ONU2, ...) end.

11. Optical transmission system according to Claim 9 or 10,
**characterized**
**in that** the splitter device (SE) is designed such that a sequence of further splitters is connected to the outputs of the first splitter (S1).

12. Optical transmission system according to one of the preceding claims,
**characterized**
**in that** the optical connections between the first splitter device (S1) and the optical network terminals (ONU1...) are free of active optical elements.

13. Optical transmission system according to Claim 9,
**characterized**
**in that** the higher-level optical transmission network (MET) is operated in the wavelength-division multiplexing mode.

14. Optical transmission system according to Claim 13,
**characterized**
**in that** the bidirectional optical amplifier arrangement (VA) is provided as a wavelength-selective metro connecting device.

## Revendications

1. Agencement d'amplificateur optique bidirectionnel (VA), qui est agencé entre une première terminaison de réseau (OLT) et une deuxième terminaison de réseau (ONU) et qui est parcouru dans une direction par un signal optique aval (OSD) et dans la direction opposée par un signal optique amont (OSU),
**caractérisé en ce que**,
une première unité de branchement et de groupage (D1) est agencée du côté de la première terminaison de réseau (OLT),
ladite unité (D1) présente du côté de la première terminaison de réseau (OLT) au moins un raccord commun (A1) pour les deux signaux (OSD et OSU) et présente du côté de la deuxième terminaison de réseau (ONU) une sortie (A2) pour le signal aval (OSD) et une entrée (A3) pour le signal amont (OSU),
la sortie (A2) pour le signal aval (OSD) est reliée à une entrée (A4) pour le signal aval(OSD) d'une deuxième unité de branchement et de groupage (D2) par l'intermédiaire d'un amplificateur optique unidirectionnel (E1),
un appareil de surveillance de puissance (M1), dont la sortie est reliée à l'amplificateur optique unidirectionnel (E1), est raccordé entre l'amplificateur optique unidirectionnel (E1) et l'entrée (A4),
une sortie (A5) pour le signal amont (OSU) de la deuxième unité de branchement et de groupage (D2) est reliée à l'entrée (A3) pour le signal amont (OSU) de la première unité de branchement et de groupage (D1) par l'intermédiaire d'un transpondeur (T),
la deuxième unité de branchement et de groupage (D2) présente un raccord commun (A6) pour les deux signaux (OSD et OSU) du côté de la deuxième terminaison de réseau (ONU), ledit raccord étant relié à un amplificateur optique bidirectionnel (E2) à partir duquel un raccord commun (A7) pour les deux signaux (OSD et OSU) mène à la deuxième terminaison de réseau (ONU),
un deuxième appareil de surveillance de puissance (M2), dont la sortie est reliée à l'amplificateur optique bidirectionnel (E2), est raccordé au plot de liaison relié au raccord commun (A7), et
l'amplificateur optique (E1, E2) est régulé de telle manière que l'amplificateur optique unidirectionnel (E1) présente un faible facteur de bruit dans la direction aval et l'amplificateur optique bidirectionnel (E2) pour le signal aval présente une puissance de sortie constante et élevée.

2. Agencement d'amplificateur optique bidirectionnel,
qui est agencé entre une première terminaison de réseau (OLT) et une deuxième terminaison de réseau (ONU) et est parcouru dans une direction par un signal optique aval (OSD) et dans la direction opposée par un signal optique amont (OSU),
**caractérisé en ce que**,
la première terminaison de réseau (OLT) est agencée dans un réseau à protocole annulaire métro,
le signal aval (OSD) est acheminé de la première terminaison de réseau (OLT) jusqu'à un premier raccord (AA1) d'un appareil d'insertion/extraction (AD),
ledit premier accord (AA1) de l'appareil d'insertion/extraction (AD) est commuté immédiatement avant un amplificateur optique unidirectionnel (E1) destiné au signal aval (OSD),
le signal amont (OSU) est acheminé d'un deuxième raccord (AA2) de l'appareil d'insertion/extraction (AD) jusqu'à la première terminaison de réseau (OLT),
l'appareil d'insertion/extraction (AD) présente, du côté de la deuxième terminaison de réseau (ONU), une sortie (AA3) pour le signal aval (OSD) et une entrée (AA4) pour le signal amont (OSU),
la sortie (AA3) pour le signal aval (OSD) est reliée à une entrée (AA5) pour le signal aval (OSD) d'une unité de branchement et de groupage (D2),
audit plot de liaison (WD) est raccordé un appareil de surveillance de puissance (M1) dont la sortie est reliée à l'amplificateur optique unidirectionnel (E1),
une sortie (AA6) pour le signal amont (OSU) de l'unité de branchement et de groupage (D2) est reliée à l'entrée (AA4) pour le signal amont (OSU) de l'appareil d'insertion/extraction (AD) par l'intermédiaire d'un transpondeur (T),
la deuxième unité de branchement et de groupage (D2) présente un raccord commun (AA7) pour les deux signaux (OSD et OSU) du côté de la deuxième terminaison de réseau (ONU), ledit raccord étant relié à un amplificateur optique bidirectionnel (E2) à partir duquel un raccord commun (AA8) pour les deux signaux (OSD et OSU) mène à la deuxième terminaison de réseau (ONU),
un deuxième appareil de surveillance de puissance (M2), dont la sortie est reliée à l'amplificateur optique bidirectionnel (E2), est raccordé au plot de liaison relié au raccord commun (AA8), et
les amplificateurs optiques (E1, E2) sont régulés de telle manière que, dans la direction aval, l'amplificateur optique bidirectionnel (E1) présente un faible facteur de bruit et l'amplificateur optique bidirectionnel (E2) pour le signal aval présente une puissance de sortie constante et élevée.

3. Agencement d'amplificateur optique bidirectionnel selon la revendication 1 ou 2,
**caractérisé en ce que**,
l'amplificateur optique unidirectionnel (E1) et l'amplificateur optique bidirectionnel (E2) sont réalisés sous forme d'amplificateurs à fibres, dont les fibres d'amplification sont dopés avec un élément appartenant aux terres rares, de manière préférée avec de l'erbium.

4. Agencement d'amplificateur optique bidirectionnel selon la revendication 3,
**caractérisé en ce que**,
l'amplificateur optique bidirectionnel (E2) est réalisé de telle manière que le signal aval (OSD) et le signal amont (OSU) sont amplifiés dans les deux directions au sein d'une fibre d'amplification commune.

5. Agencement d'amplificateur optique bidirectionnel selon la revendication 1 ou 2,
**caractérisé en ce que**,
le transpondeur (T) pour le signal amont (OSU) contient un régénérateur de données et/ou un convertisseur de longueurs d'onde.

6. Agencement d'amplificateur optique bidirectionnel selon la revendication 1 ou 2,
**caractérisé en ce que**,
le transpondeur (T) est réalisé de sorte qu'il émet un signal amont (OSU) binaire.

7. Agencement d'amplificateur optique bidirectionnel selon la revendication 1 ou 2,
**caractérisé en ce que**,
un diviseur optique (S1) est raccordé directement à l'amplificateur optique bidirectionnel (E2) du côté de la deuxième terminaison de réseau (ONU).

8. Agencement d'amplificateur optique bidirectionnel selon la revendication 1,
**caractérisé en ce que**,
la première unité de branchement et de groupage (D1) est réalisée du côté de la première terminaison de réseau (OLT) sous forme d'appareil d'insertion/extraction optique (AD) qui présente au moins deux raccords du côté de la première terminaison de réseau (OLT), de sorte que le signal aval (OSD) est prélevé dans un réseau central à protocole métro et le signal amont (OSU) est ajouté au réseau central à protocole métro.

9. Système de transmission optique,
avec un appareil de commutation central (OLT) raccordé à un réseau de transmission optique (MET) hôte, ledit appareil étant relié par l'intermédiaire d'un appareil de division optique (SE) à une pluralité de bornes de réseau optiques (ONU1, ONU2, ...),
au sein duquel un signal optique aval (OSD) est transmis dans le cadre d'un fonctionnement en multiplexage temporel dans une direction aval à partir de l'appareil de commutation central (OLT) vers les bornes de réseau optiques (ONU1, ONU2, ...), et
au sein duquel un signal optique amont (OSU) est transmis par paquets dans la direction amont à partir des bornes de réseau optiques (ONU1, ONU2, ...) vers l'appareil de commutation central (OLT),
**caractérisé en ce que**
un agencement d'amplificateur optique bidirectionnel (VA) selon l'une quelconque des revendications 1 à 8 est agencé entre l'appareil de commutation central (OLT) et l'appareil de division optique (SE).

10. Système de transmission optique selon la revendication 9,
**caractérisé en ce que**,
un premier diviseur optique (S1), qui partage le signal aval (OSD) selon un premier à l'amplificateur optique bidirectionnel (E2) du côté des bornes de réseau (ONU1, ONU2, ...), rapport et groupe le signal amont (OSU) de manière correspondante, est raccordé en tant que constituant de l'agencement d'amplificateur optique bidirectionnel (VA).

11. Système de transmission optique selon la revendication 9 ou 10,
**caractérisé en ce que**,
l'appareil de division (SE) est conçu de telle manière qu'une série d'autres diviseurs se raccordent aux sorties du premier diviseur (S1).

12. Système de transmission optique selon l'une quelconque des revendications précédentes,
**caractérisé en ce que**,
les liaisons optiques entre le premier appareil de division (S1) et les bornes de réseau optiques (ONU1...) sont exemptes d'éléments optiques actifs.

13. Système de transmission optique selon la revendication 9,
**caractérisé en ce que**,
le réseau de transmission optique hôte (MET) est réalisé pour un fonctionnement en multiplexage par répartition en longueur d'onde.

14. Système de transmission optique selon la revendication 13,
**caractérisé en ce que**,
l'agencement d'amplificateur optique bidirectionnel (VA) est prévu sous forme d'appareil de raccordement à protocole métro à sélection de longueur d'onde.
